# EUROPEAN PATENT APPLICATION

(11) **EP 4 653 229 A1**
(43) Date of publication of application: **26.11.2025**
(21) Application number: 24177032.0
(22) Date of filing: 21.05.2024
(51) Int. Cl.: B60L 1/00, B60L 3/12, B60L 7/08, B60L 7/18, B60L 50/75, B60L 58/40, B60W 20/11, B60W 50/00

(54) **A FUEL CELL ARRANGEMENT AND A CORRESPONDING METHOD FOR OPERATING A FUEL CELL ARRANGEMENT OF A FUEL CELL VEHICLE**

(71) Applicant: VOLVO TRUCK CORPORATION, 405 08 Göteborg (SE)
(72) Inventor: HINDI, Gustavo, 449 50 Alafors (SE); BLOMGREN, Fredrik, 425 35 Kärra (SE); ANDERSSON, Arne, 435 42 Mölnlycke (SE); LUNDGREN, Staffan, 438 53 Hindås (SE)
(74) Representative: Zacco Sweden AB

(57) **Abstract**

A fuel cell arrangement (20) for a fuel cell vehicle comprising a cathode inlet conditioning assembly (60) configured to receive ambient air and to output cooled compressed air, a fuel cell assembly (30) and an energy dissipating resistor (40) arranged downstream the cathode inlet conditioning assembly (60), an air bleed valve (24) arranged upstream the fuel cell assembly (30) and resistor (40), a one-directional valve (22) arranged downstream the air bleed valve (24) and upstream the resistor (40), a throttle valve (26) arranged downstream the air bleed valve (24) and upstream the fuel cell assembly (30), and a control unit (50) being configured to control the air bleed valve (24), the throttle valve (26), and the one-directional valve (22) to maintain an operating pressure of the fuel cell assembly (30) while dissipating energy via the resistor (40), when the control unit (50) identifies an upcoming brake event.

## Description

### TECHNICAL FIELD

The disclosure relates generally to a fuel cell arrangement and a corresponding method for operating a fuel cell arrangement of a fuel cell vehicle. The disclosure can be applied to heavy-duty fuel cell electric vehicles, such as trucks, buses, and construction equipment, among other vehicle types. Although the disclosure may be described with respect to a particular vehicle, the disclosure is not restricted to any particular vehicle.

### BACKGROUND

Fuel cell vehicles such as fuel cell electric vehicles (FCEV) use hydrogen fuel cells to generate electricity and emit only water vapor as a byproduct. Fuel cell vehicles are advantageous in that they allow for quick refueling of a hydrogen tank, energy recovery, quite operation, versatility, zero emissions and sustainable transportation.

A braking capacity in the fuel cell vehicles comprises different mechanisms such as service brakes, battery brakes, and auxiliary brakes. The service brakes mechanism are conventional brakes that we use in everyday driving. The battery brakes mechanism uses regenerative braking by harvesting energy from previous braking in a battery of the vehicle and thus making efficient use of energy during braking. The auxiliary brakes mechanism is an additional braking mechanism that complement the service brakes. The auxiliary brakes convert brake energy to heat dispersed to ambient.

In the fuel cell vehicles, handling braking events/endurance braking may be challenging, as compared to a vehicle propelled solely by an internal combustion engine. Also, the fuel cell vehicles, as compared to battery-driven vehicles, do not have large batteries. Thus, the fuel cell vehicles typically need for a brake resistor. However, such brake resistor needs to be cooled which considering that the fuel cells also need cooling, the cooling of the brake resistor is challenging. Therefore, there is a need for an improved fuel cell arrangement and a corresponding method for operating a fuel cell arrangement of a fuel cell vehicle.

### SUMMARY

According to a first aspect of the disclosure, a fuel cell arrangement for a fuel cell vehicle is disclosed. The fuel cell arrangement comprises a cathode inlet conditioning assembly configured to receive ambient air and to output cooled compressed air. The fuel cell arrangement comprises a fuel cell assembly. The fuel cell assembly is arranged downstream the cathode inlet conditioning assembly. The fuel cell arrangement comprises an energy dissipating resistor. The energy dissipating resistor is arranged downstream the cathode inlet conditioning assembly. The fuel cell arrangement comprises an air bleed valve. The air bleed valve is arranged downstream the cathode inlet conditioning assembly and upstream the fuel cell assembly and resistor. The fuel cell arrangement comprises a one-directional valve arranged downstream the air bleed valve and upstream the resistor. The fuel cell arrangement comprises a throttle valve. The throttle valve is arranged downstream the air bleed valve and upstream the fuel cell assembly. The fuel cell arrangement comprises a control unit. The control unit is configured to control the air bleed valve, the throttle valve, and the one-directional valve to maintain an operating pressure of the fuel cell assembly while dissipating energy via the resistor, when the control unit identifies an upcoming brake event.

In the fuel cell vehicles, when the vehicle switches from propulsion to braking i.e. when the vehicle enters a brake event, the vehicle's power ramps down from its propulsion power to its idle/target power or at least a lower power than its propulsion power. The lower power may apply when a next brake event begins before the vehicle's power reaches its idle power. Accordingly, the power of the fuel cell system needs to be ramped down from its propulsion power to its idle/target power or at least a lower power than its propulsion power. The lower power may again apply when a next brake event begins before the power of the fuel cell system reaches its idle power. However, the power of the fuel cell system ramps down at a slower rate than a rate that the vehicle's power ramps down. This means that there is a time delay between the fuel cell system's power and the vehicle's power reaching their respective idle power or at least their respective lower power. Such slower ramp down rate of the power of the fuel cell system, compared to the vehicle's power is necessary, as it prevents degradation of the fuel cell system. If the braking periods of the vehicle are long-lasting and extensive, the batteries will eventually become fully charged and can no longer absorb braking power. In such cases, an energy dissipating resistor is typically used to handle the excessive heat generated once the batteries are fully charged. The energy dissipating resistor dissipate the excessive kinetic energy into heat. However, the resistor becomes heated up and thus needs to be cooled down during the ramp down time of the fuel cell power to e.g. avoid overheating of the resistor. The fuel cell also needs to be protected during such ramp down time of the fuel cell power to ensure an appropriate e.g. a slow ramp down of the fuel cell power to prevent e.g. degradation of the fuel cell. The resistor may be cooled using a component shared with the fuel cell. For instance, the resistor may be cooled using a compressor which is also used to provide air to the fuel cell during the ramp down of the fuel cell. Therefore, there is a need for an improved fuel cell arrangement and a corresponding method for operating a fuel cell arrangement of a fuel cell vehicle.

The first aspect of the disclosure aims to address the abovementioned challenges by controlling the air bleed valve, the throttle valve, and the one-directional valve to maintain the operating pressure of the fuel cell assembly i.e. to maintain the operating pressure of the fuel cell assembly at an optimum pressure value while dissipating energy via the resistor, when the control unit identifies the upcoming brake event.

Optionally in some examples, including in at least one preferred example, the control unit is configured to control the bleed valve, the throttle valve and the one-directional valve to maintain the operating pressure of the fuel cell assembly while dissipating energy, when the control unit identifies the upcoming brake event until the fuel cell assembly returns back to a normal operating condition. The control unit may control the air bleed valve, the throttle valve, and the one-directional valve to maintain the operating pressure of the fuel cell assembly while dissipating energy via the resistor, from when the control unit identifies the upcoming brake event until when the fuel cell assembly returns back to the normal operating condition upon completion of the brake event. Thereby, the control unit may control the air bleed valve, the throttle valve, and the one-directional valve to maintain the operating pressure of the fuel cell assembly while dissipating energy via the resistor, from when the control unit identifies the upcoming brake event, during a time of the identified brake event and until completion of the brake event i.e. when the fuel cell assembly returns back to the normal operating condition upon completion of the brake event. The time of the identified brake event may comprise a first time, a second time and a third time. The first time may correspond to a start/beginning of the identified brake event. The first time may correspond to a time in which the resistor does not need to be cooled due to a thermal inertia of the resistor. The third time may correspond to an end of the identified brake event. The third time may correspond to a time in which the resistor is at a desired temperature range. The desired temperature range may be in the range of ambient temperature to 250 °C. The second time may correspond a rest of the time of the identified brake event in between the first time to the third time.

By the "normal operating condition" is hereby meant a condition of the fuel cell assembly after the completion of the brake event. For instance, the normal operating condition of the fuel cell assembly may correspond to a range of power of the fuel cell assembly. The normal operating condition of the fuel cell assembly may be related to a temperature of the resistor. For instance, the normal operating condition of the fuel cell assembly may correspond to the temperature of the resistor being equal or below a predetermined low temperature of the resistor. The predetermined low temperature may be a desired low temperature of the resistor.

A technical benefit of the first aspect of the disclosure is that it allows for the fuel cell assembly to maintain a pressure of incoming air to the fuel cell assembly e.g. a pressure of incoming compressed air at a cathode inlet of the fuel cell assembly while dissipating energy via the resistor, when the control unit identifies the upcoming brake event. It may allow for the fuel cell assembly to maintain the pressure of incoming air to the fuel cell assembly e.g. the pressure of incoming compressed air at the cathode inlet of the fuel cell assembly while dissipating energy via the resistor, when the control unit identifies the upcoming brake event until the fuel cell assembly returns back to the normal operating condition. This in turn allows for ensuring that the fuel cell assembly operates in a stable manner by preventing, or at least mitigating, a variation in operating condition of the fuel cell due to a change e.g. a sudden change in the pressure of the incoming air such as under or overshoots in pressure of the incoming air into the fuel cell assembly. Thereby, the first aspect of the invention allows for protecting the fuel cell assembly by preventing, or at least mitigating a degradation of the fuel cell during a power change of the fuel cell assembly either a power ramp up or a power ramp down of the fuel cell assembly in a simple, efficient, user- and cost-friendly manner.

Another technical benefit of the first aspect of the disclosure is that it allows for the energy dissipating resistor to become cool by receiving air from the cathode inlet conditioning assembly, via the bleed valve and the one-directional valve, controlled by the control unit when the control unit identifies the upcoming brake event. The resistor may receive air from the cathode inlet conditioning assembly from when the control unit identifies the upcoming brake event until the fuel cell assembly returns back to the normal operating condition. This in turns allows for protecting the resistor by preventing, or at least mitigating, thermal stress of the resistor in a simple, efficient, user- and cost-friendly manner. Thereby, the first aspect of the disclosure allows for increasing a lifespan of the fuel cell arrangement e.g. the fuel cell assembly and the resistor while maintaining its performance in an efficient and stable manner. The resistor may be a bank of resistor. The resistor may be a brake box resistor.

The control unit may identify the upcoming brake event by a vehicle comprising the fuel cell arrangement in a manner which per se is known in the art. The control unit may be configured to identify/detect the upcoming brake event by the vehicle in advance of the brake event by a distance such as 5 km before the brake event starts. The control unit may continue to monitor the vehicle conditions and a road ahead till the start of the brake event.

The throttle valve is advantageous, as it facilitates maintaining the operating pressure of the fuel cell assembly while dissipating energy via the resistor, when the control unit identifies the upcoming brake event. The throttle valve may facilitate maintaining the operating pressure of the fuel cell assembly while dissipating energy via the resistor, when the control unit identifies the upcoming brake event until the fuel cell assembly returns back to the normal operating condition. The throttle valve allows for a rapid adjustment of the air flow rate into the fuel cell assembly. The throttle valve allows for maintaining the pressure of incoming air to the fuel cell assembly e.g. the pressure of incoming compressed air at a cathode inlet of the fuel cell assembly in an efficient and reliable manner.

The bleed valve is advantageous, as it allows for controlling a split of air flow rate between fuel cell assembly and resistor in a safe, efficient and reliable manner. Thereby, the bleed valve allows for providing an improved control on maintaining the operating pressure of the fuel cell assembly while dissipating energy via the resistor, when the control unit identifies the upcoming brake even. The bleed valve may facilitate providing the improved control on maintaining the operating pressure of the fuel cell assembly while dissipating energy via the resistor, from when the control unit identifies the upcoming brake even until the fuel cell assembly returns back to the normal operating condition.

The one-directional valve is advantageous, as it allows for providing a pressure restriction downstream of the cathode inlet conditioning assembly i.e. a compressor of the cathode inlet conditioning assembly when the bleed valve is directing air flow to the resistor. The one-directional valve further allows for directing one-directional air flow from the cathode inlet conditioning assembly to the resistor and not from the resistor to the cathode inlet conditioning assembly. The one-directional valve may be a reed valve. The reed valve may be configured to provide the one-directional flow. The reed valve may be configured to control a pressure restriction by a dimensioned compression spring. The one-directional valve may alternatively comprise an active throttle to control the pressure restriction.

The terms "fuel cell" and "fuel cell assembly" may be used interchangeably throughout the text, both referring to one or more, typically hundreds of fuel cells, forming a fuel cell stack for generating the desired propulsion power supplied to the vehicle. By the term "control a valve" or "actuate a valve" such as control the bleed valve, control the throttle valve, control the one-directional valve or actuate the throttle valve is hereby meant any of or any combinations of opening, closing, increasing or decreasing a flow rate of a flow rate e.g. air flow rate passing through the respective valve.

Optionally in some examples, including in at least one preferred example, the cathode inlet conditioning assembly comprises an air compressor and an air cooler. The air cooler is arranged downstream the air compressor and upstream the air bleed valve. The air cooler may be a charge air cooler (CAC). The fuel cell assembly and the resistor may be arranged downstream the air cooler. A technical benefit of the air cooler may include enhancing an efficiency of the fuel cell arrangement and in particular an efficiency of the fuel cell assembly of the fuel cell arrangement by maintaining an optimal temperature of the compressed air. The cathode inlet conditioning assembly may further comprise an air filter. The air filter may be arranged upstream the air compressor. A technical benefit of the air filter may include removing various contaminants from the intake air before it enters the compressor. Examples of the contaminants are dust, dirt, oil, and lubricant. Other technical benefits of the air cooler may include enhancing an efficiency of the compressor and increasing the lifespan of the compressor. The resistor may be integrated into the cathode inlet conditioning assembly.

Optionally in some examples, including in at least one preferred example, the fuel cell assembly comprises a humidifier and a fuel cell unit arranged downstream the humidifier. The throttle valve may be arranged upstream the humidifier. A technical benefit of the humidifier may include improving an efficiency and durability of the fuel cell unit and enhancing a performance of the fuel cell unit. The throttle valve may be arranged upstream the fuel cell unit.

Optionally in some examples, including in at least one preferred example, the fuel cell unit comprises a cathode inlet, a cathode outlet, and a pressure sensor. The cathode inlet may be arranged downstream the humidifier. The pressure sensor may be arranged at the cathode inlet of the fuel cell unit and may be configured to measure an operating pressure of the fuel cell unit of the fuel cell assembly. The pressure sensor may be configured to measure a pressure of the compressed air entering into the fuel cell unit i.e. the cathode inlet pressure of the fuel cell unit. The pressure sensor may be arranged in connection with the control unit. Thus, the control unit may receive data related to the cathode inlet pressure of the fuel cell unit from the pressure sensor. Thereby, the pressure sensor may allow for the control unit to control the air bleed valve, the throttle valve, and the one-directional valve to maintain the operating pressure of the fuel cell assembly, while dissipating energy via the resistor, when the control unit identifies the upcoming brake event in a more accurate manner.

Optionally in some examples, including in at least one preferred example, the resistor comprises a temperature sensor and an exhaust air outlet. The temperature sensor may be arranged at the resistor. Thereby, the temperature sensor may allow for measuring a temperature of the resistor in an accurate manner. This may in turn allow for the control unit to control the air bleed valve, the throttle valve, and the one-directional valve to maintain the operating pressure of the fuel cell assembly, while dissipating energy via the resistor, when the control unit identifies the upcoming brake event in an even more accurate manner. The temperature sensor may be arranged at/on a surface of the resistor e.g. at/on a surface of the brake box resistor. The exhaust air outlet may be arranged downstream the resistor.

Optionally in some examples, including in at least one preferred example, the temperature sensor is arranged at the exhaust air outlet of the resistor. The temperature sensor may be arranged at/in the exhaust air outlet of the resistor. Thereby, the temperature sensor may be arranged at/on a surface of the resistor or at/in the exhaust air outlet of the resistor i.e. in a flexible manner. The resistor may comprise a plurality of temperature sensors. The plurality of the temperature sensors may be arranged at different places/locations of the resistor. For instance, the resistor may comprise two temperature sensors. One of the two temperature sensors may be arranged at at/on a surface of the resistor. Another one of the two temperature sensors may be arranged at/in the exhaust air outlet of the resistor.

Optionally in some examples, including in at least one preferred example, the control unit is arranged in connection with the cathode inlet conditioning assembly, the fuel cell assembly, the resistor, the air bleed valve, the one-directional valve and the throttle valve. The control unit may be arranged in connection with the air filter, the compressor, the air cooler. The control unit may be arranged in connection with the humidifier the fuel cell unit, and the pressure sensor. The control unit may be arranged in connection with the temperature sensor and the exhaust air outlet.

According to a second aspect of the disclosure, a heavy-duty fuel cell electric vehicle comprising a fuel cell arrangement is disclosed. The fuel cell arrangement comprises a cathode inlet conditioning assembly configured to receive ambient air and to output cooled compressed air. The fuel cell arrangement comprises a fuel cell assembly. The fuel cell assembly is arranged downstream the cathode inlet conditioning assembly. The fuel cell arrangement comprises an energy dissipating resistor. The energy dissipating resistor is arranged downstream the cathode inlet conditioning assembly. The fuel cell arrangement comprises an air bleed valve. The air bleed valve is arranged downstream the cathode inlet conditioning assembly and upstream the fuel cell assembly and resistor. The fuel cell arrangement comprises a one-directional valve arranged downstream the air bleed valve and upstream the resistor. The fuel cell arrangement comprises a throttle valve. The throttle valve is arranged downstream the air bleed valve and upstream the fuel cell assembly. The fuel cell arrangement comprises a control unit. The control unit is configured to control the air bleed valve, the throttle valve, and the one-directional valve to maintain an operating pressure of the fuel cell assembly while dissipating energy via the resistor, when the control unit identifies an upcoming brake event. This aspect may generally present the same or similar advantages as defined above according to the first aspect of the invention. In overall, the second aspect of the disclosure allows for increasing a lifespan of the fuel cell unit and the resistor of the heavy-duty FECV while ensuring their performance in an efficient manner. Thus, the second aspect of the disclosure allows for increasing a lifespan of the heavy-duty FECV while ensuring its performance in an efficient and stable manner.

According to a third aspect of the invention, a method for operating a fuel cell arrangement of a fuel cell vehicle is disclosed. The fuel cell arrangement comprises a cathode inlet conditioning assembly, a fuel cell assembly, an energy dissipating resistor, an air bleed valve arranged downstream the cathode inlet conditioning assembly and upstream the fuel cell assembly and the resistor, a one-directional valve arranged downstream the air bleed valve and upstream the resistor, and a throttle valve arranged downstream the air bleed valve and upstream the fuel cell assembly. The method comprises the step of identifying an upcoming brake event. The method comprises the step of controlling the air bleed valve, the throttle valve, and the one-directional valve to maintain an operating pressure of the fuel cell assembly while dissipating energy via the resistor. The method comprises the step of gracefully returning to a normal operation of the fuel cell assembly upon completion of the brake event. This aspect may generally present the same or similar advantages as defined above according to the first and second aspects of the invention. By the term "gracefully returning" is hereby meant returning to the normal condition while avoiding under or overshoots in pressure and air flow rate to the cathode inlet of the fuel cell unit.

Optionally in some examples, including in at least one preferred example, the step of controlling further comprises controlling a power of an air compressor of the cathode inlet conditioning assembly to maintain the operating pressure of the fuel cell assembly while dissipating energy via the resistor. Thereby, the controlling the power of the air compressor may allow for maintaining the operating pressure of the fuel cell assembly by providing required air to the fuel cell assembly, based on a power of a fuel cell unit of the fuel cell assembly. In addition, the controlling the power of the air compressor may allow for actively cooling the resistor while the resistor is dissipating excessive energy into heat. The controlling the power of the air compressor may thus facilitate protecting the fuel cell assembly and the resistor in a simple, efficient, user- and cost-friendly manner.

Optionally in some examples, including in at least one preferred example, the step of controlling comprises controlling the power of the air compressor of the cathode inlet conditioning assembly and controlling the bleed valve, the throttle valve, and the one-directional valve to maintain the operating pressure of the fuel cell assembly while dissipating energy via the resistor, from identifying the upcoming brake event until returning to the normal operation of the fuel cell assembly upon completion of the brake event. Thereby, step of controlling may comprise controlling the power of the air compressor of the cathode inlet conditioning assembly and controlling the bleed valve, the throttle valve, and the one-directional valve from a time of identifying the upcoming brake event, during a time of the identified brake event until completion of the brake event and returning back to the normal operation of the fuel cell assembly upon completion of the brake event.

Optionally in some examples, including in at least one preferred example, the step of controlling the air bleed valve, the throttle valve, and the one-directional valve is performed in accordance with a power of a fuel cell unit of the fuel cell assembly to maintain an operating pressure of the fuel cell assembly while dissipating energy via the resistor. The power of the fuel cell unit of the fuel cell assembly may ramp down in the start of the brake event. For instance, the power of the fuel cell unit may ramp down to a minimum power range during the first time of the time of the identified brake event. The minimum power range may be in the range of 0 kW to 60 kW. The power of the fuel cell unit may remain at/within the minimum power range during the second time of the time of the identified brake event. The power of the fuel cell unit may ramp up during the third time of the time of the identified brake event. For instance, the power of the fuel cell unit may ramp up to a maximum power range during the third time of the time of the identified brake event. The maximum power range may be in the range of 60 kW to 450 kW. The step of controlling the air bleed valve, the throttle valve, and the one-directional valve may be performed in accordance with the power of the fuel cell unit of the fuel cell assembly to maintain the operating pressure of the fuel cell assembly while dissipating energy via the resistor. The controlling the throttle valve may be performed in accordance with the power value of the fuel cell unit to maintain the operating pressure of the fuel cell unit of the fuel cell assembly. This may in turn prevent, or at least mitigate, degradation of the fuel cell unit of the fuel cell assembly. The bleed valve and the one-directional valve may be open during the first time, the second time and the third time of the time of the identified brake event.

Optionally in some examples, including in at least one preferred example, the step of controlling comprises increasing the power of the air compressor of the cathode inlet conditioning assembly and actuating the air bleed valve, the throttle valve, and the one-directional valve to cool down the resistor when identifying the upcoming brake event. There may be a time window from identifying the upcoming brake event to the start/beginning of the brake event. The time window may correspond to a distance window. The power of the air compressor of the cathode inlet conditioning assembly may increase during the first time of the time of the identified brake event. The power of the air compressor of the cathode inlet conditioning assembly may be at maximum power range during the second time and the third time of the time of the identified brake event. The actuating the air bleed valve, the throttle valve, and the one-directional valve may comprise opening the bleed valve and the one-directional valve to cool down the resistor when identifying the upcoming brake event. The opening the bleed valve and the one-directional valve may be performed simultaneously. The actuating the air bleed valve, the throttle valve, and the one-directional valve may comprise gradually closing the throttle valve enough to lower the air flow rate into the fuel unit of the fuel cell assembly i.e. to lower the pressure of incoming compressed air at the cathode inlet of the fuel cell unit of the fuel cell assembly. The bleed valve and the one-directional valve may be open during the first time, the second time and the third time of the time of the identified brake event. By "gradually closing the throttle valve" is hereby meant closing the throttle valve over the time window to lower the pressure of incoming compressed air at the cathode inlet of the fuel cell unit of the fuel cell assembly. The throttle valve may not need to be fully closed. This may in turn allow for increasing the air flow rate to the resistor via the bleed valve and the one- directional valve to cool down the resistor and prior to a start of the brake event.

Optionally in some examples, including in at least one preferred example, the increasing the power of the air compressor of the cathode inlet conditioning assembly is performed simultaneously with actuating the air bleed valve, the throttle valve, and the one-directional valve. Preferably, the controlling the power of the air compressor of the cathode inlet conditioning assembly may be performed simultaneously with controlling the bleed valve, the throttle valve, and the one-directional valve. Preferably, the actuating the bleed valve, the throttle valve, and the one-directional valve may be performed simultaneously. A time of controlling the power of the air compressor of the cathode inlet conditioning assembly e.g. a time of increasing the power and controlling the bleed valve, the throttle valve, and the one-directional valve e.g. a time of actuating the valves may depend on a response of fuel cell arrangement. Alternatively, the increasing the power of the air compressor of the cathode inlet conditioning assembly may not be performed simultaneously with actuating the air bleed valve, the throttle valve, and the one-directional valve. For instance, the gradually closing the throttle valve may be performed simultaneously with increasing the power of the air compressor of the cathode inlet conditioning assembly at a time T1. The opening the air bleed valve may be performed simultaneously with actuating the one-directional valve at a time T2. There may be a time delay from T1 to T2. The time delay may be in the range of 0.1 sec to 5 sec, preferably 0.5 sec.

Optionally in some examples, including in at least one preferred example, the step of returning to the normal operation of the fuel cell assembly comprises reducing the power of the air compressor of the cathode inlet conditioning assembly and actuating the air bleed valve, the throttle valve and the one-directional valve upon the completion of the brake event. The actuating the air bleed valve, the throttle valve, and the one-directional valve may comprise closing the bleed valve and the one-directional valve upon the completion of the brake event and returning back to the normal operation of the fuel cell assembly. The closing the bleed valve and the one-directional valve may be performed simultaneously. The actuating the air bleed valve, the throttle valve, and the one-directional valve may comprise gradually opening the throttle valve to increase the air flow rate into the fuel unit of the fuel cell assembly i.e. to increase the pressure of incoming compressed air at the cathode inlet of the fuel cell unit of the fuel cell assembly. By "gradually opening the throttle valve" is hereby meant opening the throttle valve over the time to increase the pressure of incoming compressed air at the cathode inlet of the fuel cell unit of the fuel cell assembly. This may in turn allow for maintaining the operating pressure of the fuel cell unit of the fuel cell assembly in accordance with the power of the fuel cell unit which increasing u upon the completion of the brake event and returning back to the normal operation of the fuel cell assembly.

Optionally in some examples, including in at least one preferred example, the reducing the power of the air compressor of the cathode inlet conditioning assembly is performed simultaneously with actuating the air bleed valve, the throttle valve, and the one-directional valve. Alternatively, the reducing the power of the air compressor of the cathode inlet conditioning assembly may not be performed simultaneously with actuating the air bleed valve, the throttle valve, and the one-directional valve. For instance, the gradually opening the throttle valve may be performed simultaneously with reducing the power of the air compressor of the cathode inlet conditioning assembly at a time T3. The closing the air bleed valve may be performed simultaneously with closing the one-directional valve at a time T4. There may be a time delay from T3 to T4. The time delay may be in the range of 1 sec to 20 sec, preferably 10 sec.

According to a fourth aspect of the invention, a computer-implemented method for operating a fuel cell arrangement of a fuel cell vehicle is disclosed. The computer-implemented method comprises the steps of a method according to the third aspect of the invention. The method is configured to be performed by a processing circuitry of a control system of the fuel cell arrangement of the fuel cell vehicle.

According to a fifth aspect of the invention, a computer program product is disclosed. The computer program product comprises program code for performing, when executed by the processing circuitry, the method according to the third aspect of the invention.

According to a sixth aspect of the invention, a non-transitory computer-readable storage medium is disclosed. The non-transitory computer-readable storage medium comprises instructions, which when executed by the processing circuitry, cause the processing circuitry to perform the method according to the third aspect of the invention.

The fourth, fifth and sixth aspects of the invention may generally present the same or similar advantages as defined above according to the first, second, and third aspects of the invention.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a block diagram illustrating a side view of an example of a vehicle, in accordance with examples of the present disclosure.
**FIG. 2** is a block diagram illustrating an example of a fuel cell arrangement of the vehicle of FIG. 1, in accordance with examples of the present disclosure.
**FIG. 3** is a block diagram illustrating an example of a fuel cell arrangement when an upcoming brake event is identified, in accordance with examples of the present disclosure.
**FIG. 4** is a block diagram illustrating an example of a fuel cell arrangement during the identified brake event, in accordance with examples of the present disclosure.
**FIG. 5** is a flowchart illustrating an example of a method for operating a fuel cell arrangement of a fuel cell vehicle.

### DETAILED DESCRIPTION

The detailed description set forth below provides information and examples of the disclosed technology with sufficient detail to enable those skilled in the art to practice the disclosure.

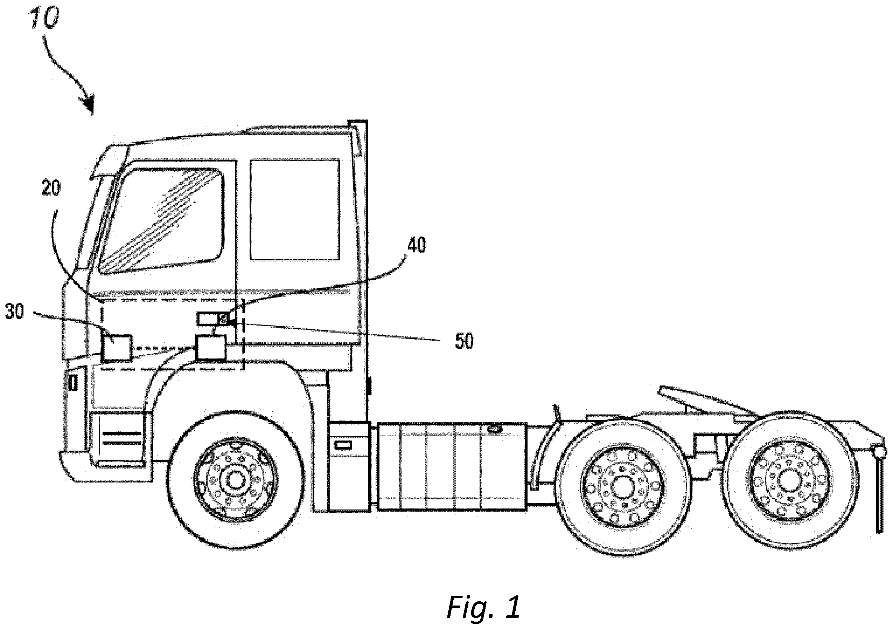

**FIG. 1** is a block diagram illustrating a side view of an example of a vehicle in accordance with examples of the present disclosure. **FIG. 1** shows a heavy-duty fuel cell electric vehicle 10. The vehicle 10 is shown as a truck, such as a heavy-duty truck. It should however be appreciated that the present disclosure is not limited to this, or any other specific type of vehicle, and may be used in /any other type of vehicle, such as a bus, construction equipment, e.g. a wheel loader and an excavator, a passenger car. The vehicle may in some examples also be a marine vessel. In some examples, the vehicle may be an aircraft. The vehicle 10 may be an autonomous vehicle, i.e. a self-driving vehicle, and/or the vehicle 10 may be arranged to be operated by a driver. The driver may be an on-board driver and/or an off-board driver which controls the vehicle from a remote location.

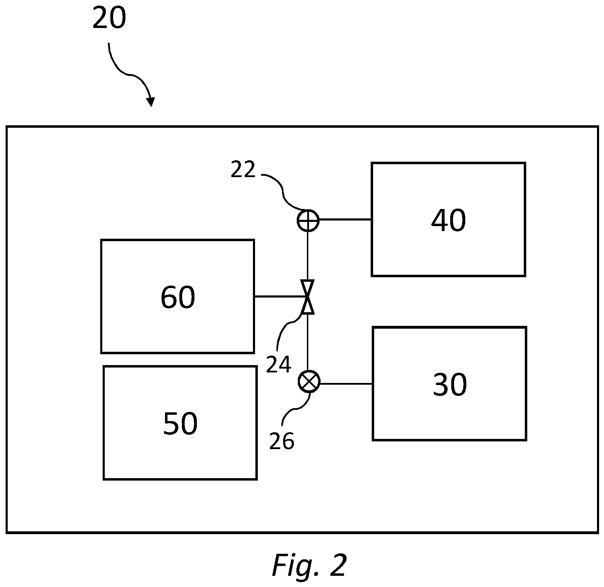

**FIG. 2** shows a block diagram illustrating an example of a fuel cell arrangement 20 for the fuel cell vehicle 10, shown in **FIG.1****.** **FIG. 2** shows that the fuel cell arrangement 20 comprises a cathode inlet conditioning assembly 60. The cathode inlet conditioning assembly 60 is configured to receive ambient air. The cathode inlet conditioning assembly 60 is configured to output cooled compressed air. The fuel cell arrangement 20 comprises a fuel cell assembly 30. The fuel cell assembly 30 is arranged downstream the cathode inlet conditioning assembly 60. The fuel cell arrangement 20 comprises an energy dissipating resistor 40. The energy dissipating resistor 40 is arranged downstream the cathode inlet conditioning assembly 60. The fuel cell arrangement 20 comprises an air bleed valve 24. The air bleed valve 24 is arranged downstream the cathode inlet conditioning assembly 60. The air bleed valve 24 is arranged upstream the fuel cell assembly 30. The air bleed valve 24 is arranged upstream the resistor 40. The fuel cell arrangement 20 comprises a one-directional valve 22. The one-directional valve 22 is arranged downstream the air bleed valve 24. The one-directional valve 22 is arranged upstream the resistor 40. The fuel cell arrangement 20 comprises a throttle valve 26. The throttle valve 26 is arranged downstream the air bleed valve 24. The throttle valve 26 is arranged upstream the fuel cell assembly 30.

In connection with **FIG.1** and **FIG. 2****,** the fuel cell arrangement 20 comprises a control unit 50. The control unit is configured to control the air bleed valve 24. The control unit is configured to control the throttle valve 26. The control unit is configured to control the one-directional valve 22. The control unit is configured to maintain an operating pressure of the fuel cell assembly 30 while dissipating energy via the resistor 40, when the control unit 50 identifies 110 an upcoming brake event. The control unit 50 may be configured to maintain the operating pressure of the fuel cell assembly 30 while dissipating energy, when the control unit 50 identifies 110 the upcoming brake event until fuel cell assembly 30 returns back to a normal operating condition. The energy dissipating resistor 40 may convert electric energy into thermal energy when power is transmitted to the resistor 40. Thus, the resistor 40 may require cooling to reduce a temperature of the resistor 40 below a certain threshold. The resistor 40 may be a conventional and commercially available resistor. The resistor may be a resistor configured for being used in a heavy-duty fuel cell electric vehicle e.g. a truck. For instance, the resistor may be an energy dissipating resistor configured for higher power dissipation.

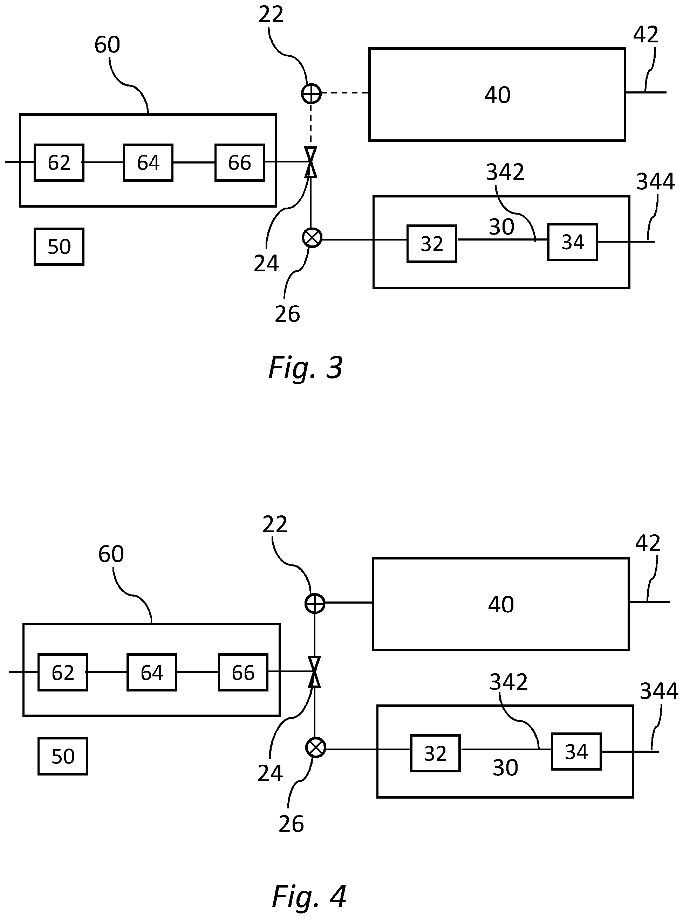

**FIGs. 3** and **4** show that the cathode inlet conditioning unit assembly 60 comprises an air compressor 64. The cathode inlet conditioning unit assembly 60 may comprise an air cooler 66. The air cooler 66 may be arranged downstream the air compressor 64 and upstream the air bleed valve 24. The air cooler 66 may be a charge air cooler (CAC). The air cooler 66 may be an air to air charge air cooler. The air cooler 66 may be a water/coolant to air charge air cooler. The cathode inlet conditioning assembly 60 may comprise an air filter 62. The air filter 62 may be arranged upstream the air compressor 64. The air filter 62 may be configured to received air e.g. from ambient. The compressor 64 may be an integrated compressor brake box (CBB). The compressor 64 may be an air compressor. The compressor 64 may be configured to receive air from atmosphere, such as an air from an ambient environment. The compressor 64 may be configured to receive air from the air filter 62. The compressor 64 may be configured to pressurize the received air to form compressed air. The compressor 64 may be configured to output the compressed air. The compressor 64 may be an electrically driven compressor. The compressor 64 may be configured to operate in any type of driving situation, including when the vehicle is not braking. The compressor 64 may be configured to provide the compressed air to the fuel cell assembly 30.

**FIGs. 3** and **4** show that the fuel cell assembly 30 comprises a humidifier 32. The fuel cell assembly 30 may comprise a fuel cell unit 34. The fuel cell unit 34 may be arranged downstream the humidifier 32. The throttle valve 26 may be arranged upstream the humidifier 32. The fuel cell unit 34 may comprise a cathode inlet 342. The fuel cell unit 34 may comprise a cathode outlet 344. The fuel cell unit 34 may comprise a pressure sensor. The cathode inlet 342 may be arranged downstream the humidifier 32. The pressure sensor may be arranged at the cathode inlet 342 of the fuel cell unit 34. The pressure sensor may be configured to measure an operating pressure of the fuel cell unit 34 of the fuel cell assembly 30. The fuel cell unit 34 may comprise a plurality of fuel cell units 30, e.g. two or more fuel cell units, such that the vehicle 10 may have multiple fuel cell units 30, e.g. two or more fuel cell units. In some examples, the fuel cell units 30 may comprise more than two fuel cell units 30, such as three, four, five, or more than five fuel cell units 30. Each fuel cell unit 30 may comprise one or more, typically multiple, fuel cells which together form a fuel cell stack. The fuel cell unit 30 may comprise a fuel cell stack comprising an anode or anode side, a cathode or cathode side, and a membrane such as e.g. PEM separating the anode and cathode. The anode of the fuel cell unit 30 may receive fuel such as hydrogen and the cathode may receive an oxidant such as oxygen or air typically an air acquired from the outside environment. As a result of the electrochemical reaction that occurs in a fuel cell stack of fuel cell unit 30, electrical energy is produced that is supplied to a load such as e.g. one or more electric motors. A by-product of operation of the fuel cell stack is water and heat. The structure of the fuel cell unit 30 is not shown in detail herein, and examples herein are not limited to any specific implementation of the fuel cell unit 30.

The throttle valve 26 may be configured to adjust a flow rate of incoming air from the air cooler 66 of the cathode inlet conditioning assembly 60 suitable for the fuel cell assembly 30. The throttle valve 26 may be operated in a way to provide a desired mass flow rate at different set points for power of the fuel cell assembly 30. The throttle valve 26 may be a conventional and commercially-available throttle valve suitable for the fuel cell arrangement 20.

**FIGs. 3** and **4** show that the resistor 40 comprises an exhaust air outlet 42. The resistor 40 may comprise a temperature sensor. The temperature sensor may be arranged at the resistor 40. The temperature sensor may be arranged at the exhaust air outlet 42 of the resistor 40. The control unit 50 may be arranged in connection with the cathode inlet conditioning assembly 60. The control unit 50 may be arranged in connection with the fuel cell assembly 30. The control unit 50 may be arranged in connection with the resistor 40. The control unit 50 may be arranged in connection with the air bleed valve 24. The control unit 50 may be arranged in connection with the one-directional valve 22. The control unit 50 may be arranged in connection with the throttle valve 26. The vehicle 10 may comprise one or more sensors. The sensors may be arranged at/in/on the vehicle 10. The sensors may be configured to provided inputs to the control unit 50. The sensors may be configured to provide inputs related to a vehicle weight, vehicle speed, road altitude, a road inclination, global positioning system, route, and current temperature of the resistor 40. The control unit 50 may be configured to receive inputs from such sensors. The control unit 50 may be configured to identify 110 the upcoming brake event by the vehicle 10 based on any of or any combination of received inputs. For instance, the control unit 50 may be configured to identify 110 the upcoming brake event by the vehicle 10 within a time period based on received input related to road inclination.

**FIG. 3** shows the fuel cell arrangement 20 at normal operating condition of the fuel cell assembly 30. **FIG. 3** shows that the bleed valve 24 and the one-directional valve 22 are closed. At normal operation of the fuel cell assembly 30, a power of the air compressor 64 may be at a normal operating range. The normal operating range of the power of the air compressor 64 may be in the range of 0 kW to 60 kW. At normal operation of the fuel cell assembly 30, a power of the fuel cell unit 34 may be a normal operating range. The normal operating range of the power of the fuel cell unit 34 may be in the range of 0 kW to 450 kW. At normal operation of the fuel cell assembly 30, the throttle valve 26 may be open such as fully open.

**FIG. 4** shows the fuel cell arrangement 20 when the upcoming brake event is identified 110 i.e. in preparation for the brake event. **FIG. 4** shows that the air bleed valve 24, the throttle valve 26, and the one-directional valve 22 are actuated to cool down the resistor 40 when identifying 110 the upcoming brake event. **FIG. 4** shows that the bleed valve 24 and the one-directional valve 22 are open. **FIG. 4** shows that the throttle valve 26 is open such as partially open. The throttle valve 26 may be actuated in accordance with a power of a fuel cell unit 34 of the fuel cell assembly 30 to maintain the operating pressure of the fuel cell assembly 30 while dissipating energy via the resistor 40. The power of the air compressor 64 of the cathode inlet conditioning assembly 60 may increase to cool down the resistor 40 when identifying 110 the upcoming brake event.

**FIG. 4** also shows the fuel cell arrangement 20 during a time of the identified brake event. The time of the identified brake event may comprise a first time, a second time and a third time. The first time may correspond to a start/beginning of the identified brake event. The first time may correspond to a time in which the resistor 40 does not need to be cooled due to a thermal inertia of the resistor. The third time may correspond to an end of the identified brake event. The third time may correspond to a time in which the resistor 40 is at a desired temperature range. **FIG. 4** also shows the fuel cell arrangement 20 until completion of the brake event and returning back to the normal operation of the fuel cell assembly 30 upon completion of the brake event.

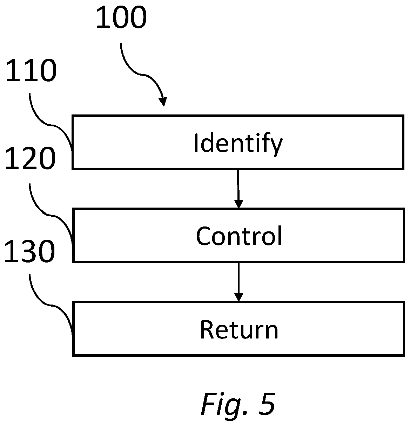

**FIG. 5** shows a flowchart illustrating an example of a method 100 for operating a fuel cell arrangement 20 of a fuel cell vehicle 10. The fuel cell arrangement 20 comprises a cathode inlet conditioning assembly 60. The fuel cell arrangement 20 comprises a fuel cell assembly 30. The fuel cell arrangement 20 comprises an energy dissipating resistor 40. The fuel cell arrangement 20 comprises an air bleed valve 24 arranged downstream the cathode inlet conditioning assembly 60 and upstream the fuel cell assembly 30 and resistor 40. The fuel cell arrangement 20 comprises a one-directional valve 22 arranged downstream the air bleed valve 24 and upstream the resistor 40. The fuel cell arrangement 20 comprises a throttle valve 26 arranged downstream the air bleed valve 24 and upstream the fuel cell assembly 30. The fuel cell arrangement 20 may be similar to the fuel cell arrangement, shown in **FIG. 2****.**

**FIG. 5** shows the method 100 comprises the step of identifying 110 an upcoming brake event. The method 100 comprises the step of controlling 120 the air bleed valve 24, the throttle valve 26, and the one-directional valve 22 to maintain an operating pressure of the fuel cell assembly 30 while dissipating energy via the resistor 40. The method 100 comprises the step of gracefully returning 130 to a normal operation of the fuel cell assembly 30 upon completion of the brake event.

The step of controlling 120 may further comprise controlling a power of an air compressor 64 of the cathode inlet conditioning assembly 60 to maintain the operating pressure of the fuel cell assembly 30 while dissipating energy via the resistor 40. The step of controlling 120 may comprise controlling the power of the air compressor 64 of the cathode inlet conditioning assembly 60 and controlling the bleed valve 24, the throttle valve 26, and the one-directional valve 22 to maintain the operating pressure of the fuel cell assembly 30 while dissipating energy via the resistor 40, from identifying 110 the upcoming brake event until returning 130 to the normal operation of the fuel cell assembly (30) upon completion of the brake event. The step of controlling 120 the air bleed valve 24, the throttle valve 26, and the one-directional valve 22 may be performed in accordance with a power of a fuel cell unit 34 of the fuel cell assembly 30 to maintain the operating pressure of the fuel cell assembly 30 while dissipating energy via the resistor 40. The step of controlling 120 may comprise increasing the power of the air compressor 64 of the cathode inlet conditioning assembly 60 and actuating the air bleed valve 24, the throttle valve 26, and the one-directional valve 22 to cool down the resistor 40 when identifying 110 the upcoming brake event. The increasing the power of the air compressor 64 of the cathode inlet conditioning assembly 60 may be performed simultaneously with actuating the air bleed valve 24, the throttle valve 26, and the one-directional valve 22.

The step of returning 130 to the normal operation of the fuel cell assembly 30 may comprise reducing the power of the air compressor 64 of the cathode inlet conditioning assembly 60 and actuating the air bleed valve 24, the throttle valve 26 and the one-directional valve 22 upon the completion of the brake event. The reducing the power of the air compressor 64 of the cathode inlet conditioning assembly 60 may be performed simultaneously with actuating the air bleed valve 24, the throttle valve 26 and the one-directional valve 22. The method 100 may be performed in the same order as shown in **FIG. 5****.** The method 100 may be performed using the fuel cell arrangement 20 and the vehicle 10 respectively shown in **FIG. 2** and **FIG. 1****.** The method 100 may be a computer-implemented method 100 for operating a fuel cell arrangement 20 of a fuel cell vehicle 10. The method 100 may comprise the steps of the method 100, as shown in **FIG. 5** and defined above. The computer-implemented method 100 may be configured to be performed by a processing circuitry of a control unit 50 of the vehicle fuel cell arrangement 20 of the fuel cell vehicle 10. The method 100 may be executed by the processing circuitry of a computer program product. The computer program product may comprise program code for performing, when executed by the processing circuitry, the steps of the method 100, as shown in **FIG. 5** and defined above. The method 100 may be executed by the processing circuitry of a non-transitory computer-readable storage medium. The non-transitory computer-readable storage medium may comprise instructions, which when executed by the processing circuitry, cause the processing circuitry to perform the steps of the method 100, as shown in **FIG. 5** and defined above.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A fuel cell arrangement (20) for a fuel cell vehicle (10), the fuel cell arrangement (20) comprising:
- a cathode inlet conditioning assembly (60) configured to receive ambient air and to output cooled compressed air,
- a fuel cell assembly (30) arranged downstream the cathode inlet conditioning assembly (60),
- an energy dissipating resistor (40) arranged downstream the cathode inlet conditioning assembly (60),
- an air bleed valve (24) arranged downstream the cathode inlet conditioning assembly (60) and upstream the fuel cell assembly (30) and resistor (40),
- a one-directional valve (22) arranged downstream the air bleed valve (24) and upstream the resistor (40),
- a throttle valve (26) arranged downstream the air bleed valve (24) and upstream the fuel cell assembly (30), and
- a control unit (50) being configured to control the air bleed valve (24), the throttle valve (26), and the one-directional valve (22) to maintain an operating pressure of the fuel cell assembly (30) while dissipating energy via the resistor (40), when the control unit (50) identifies (110) an upcoming brake event.

2. The fuel cell arrangement (20) according to claim 1, wherein the control unit (50) is configured to control the bleed valve (24), the throttle valve (26) and the one-directional valve (22) to maintain the operating pressure of the fuel cell assembly (30) while dissipating energy, when the control unit (50) identifies (110) the upcoming brake event until fuel cell assembly (30) returns back to a normal operating condition.

3. The fuel cell arrangement (20) according to claim 1 or 2, wherein the cathode inlet conditioning assembly (60) comprises an air compressor (64) and an air cooler (66), wherein the air cooler (66) is arranged downstream the air compressor (64) and upstream the air bleed valve (24).

4. The fuel cell arrangement (20) according to any of the preceding claims, wherein the fuel cell assembly (30) comprises a humidifier (32) and a fuel cell unit (34) arranged downstream the humidifier (32), wherein the throttle valve (26) is arranged upstream the humidifier (32).

5. The fuel cell arrangement (20) according to claim 4, wherein the fuel cell unit (34) comprises a cathode inlet (342), a cathode outlet (344), and a pressure sensor, wherein the cathode inlet (342) is arranged downstream the humidifier (32), and wherein the pressure sensor is arranged at the cathode inlet (342) of the fuel cell unit (34) and is configured to measure an operating pressure of the fuel cell unit (34) of the fuel cell assembly (30).

6. The fuel cell arrangement (20) according to any of the preceding claims, wherein the resistor (40) comprises a temperature sensor and an exhaust air outlet (42), wherein the temperature sensor is arranged at the resistor (40).

7. The fuel cell arrangement (20) according to claim 6, wherein the temperature sensor is arranged at the exhaust air outlet (42) of the resistor (40).

8. The fuel cell arrangement (20) according to any of the preceding claims, wherein the control unit (50) is arranged in connection with the cathode inlet conditioning assembly (60), the fuel cell assembly (30), the resistor (40), the air bleed valve (24), the one-directional valve (22), and the throttle valve (26).

9. A heavy duty fuel cell electric vehicle (10) comprising a fuel cell arrangement (20), the fuel cell arrangement (20) comprising:
- a cathode inlet conditioning assembly (60) configured to receive ambient air and to output cooled compressed air,
- a fuel cell assembly (30) arranged downstream the cathode inlet conditioning assembly (60),
- an energy dissipating resistor (40) arranged downstream the cathode inlet conditioning assembly (60),
- an air bleed valve (24) arranged downstream the cathode inlet conditioning assembly (60) and upstream the fuel cell assembly (30) and resistor (40),
- a one-directional valve (22) arranged downstream the air bleed valve (24) and upstream the resistor (40),
- a throttle valve (26) arranged downstream the air bleed valve (24) and upstream the fuel cell assembly (30), and
- a control unit (50) being configured to control the air bleed valve (24), the throttle valve (26), and the one-directional valve (22) to maintain an operating pressure of the fuel cell assembly (30) while dissipating energy via the resistor (40), when the control unit (50) identifies (110) an upcoming brake event.

10. A method (100) for operating a fuel cell arrangement (20) of a fuel cell vehicle (10), the fuel cell arrangement (20) comprising a cathode inlet conditioning assembly (60), a fuel cell assembly (30), an energy dissipating resistor (40), an air bleed valve (24) arranged downstream the cathode inlet conditioning assembly (60) and upstream the fuel cell assembly (30) and resistor (40), a one-directional valve (22) arranged downstream the air bleed valve (24) and upstream the resistor (40), and a throttle valve (26) arranged downstream the air bleed valve (24) and upstream the fuel cell assembly (30),
the method (100) comprising the steps of
- identifying (110) an upcoming brake event,
- controlling (120) the air bleed valve (24), the throttle valve (26), and the one-directional valve (22) to maintain an operating pressure of the fuel cell assembly (30) while dissipating energy via the resistor (40), and
- gracefully returning (130) to a normal operation of the fuel cell assembly (30) upon completion of the brake event.

11. The method (100) according to claim 10, wherein the step of controlling (120) further comprises controlling a power of an air compressor (64) of the cathode inlet conditioning assembly (60) to maintain the operating pressure of the fuel cell assembly (30) while dissipating energy via the resistor (40).

12. The method (100) according to claim 11, wherein the step of controlling (120) comprises controlling the power of the air compressor (64) of the cathode inlet conditioning assembly (60)
and controlling the bleed valve (24), the throttle valve (26), and the one-directional valve (22) to maintain the operating pressure of the fuel cell assembly (30) while dissipating energy via the resistor (40), from identifying (110) the upcoming brake event until returning (130) to the normal operation of the fuel cell assembly (30) upon completion of the brake event.

13. The method according to any of the claims 10-12, wherein the step of controlling (120) the air bleed valve (24), the throttle valve (26), and the one-directional valve (22) is performed in accordance with a power of a fuel cell unit (34) of the fuel cell assembly (30) to maintain the operating pressure of the fuel cell assembly (30) while dissipating energy via the resistor (40).

14. The method (100) according to any of the claims 10-13, wherein the step of controlling (120) comprises increasing the power of the air compressor (64) of the cathode inlet conditioning assembly (60) and actuating the air bleed valve (24), the throttle valve (26), and the one-directional valve (22) to cool down the resistor (40) when identifying (110) the upcoming brake event.

15. The method (100) according to claim 14, wherein the increasing the power of the air compressor (64) of the cathode inlet conditioning assembly (60) is performed simultaneously with actuating the air bleed valve (24), the throttle valve (26), and the one-directional valve (22).

16. The method (100) according to any of the claims 10-15, wherein the step of returning (130) to the normal operation of the fuel cell assembly (30) comprises reducing the power of the air compressor (64) of the cathode inlet conditioning assembly (60) and actuating the air bleed valve (24), the throttle valve (26) and the one-directional valve (22) upon the completion of the brake event.

17. The method (100) according to claim 16, wherein the reducing the power of the air compressor (64) of the cathode inlet conditioning assembly (60) is performed simultaneously with actuating the air bleed valve (24), the throttle valve (26) and the one-directional valve (22).

18. A computer-implemented method (100) for operating a fuel cell arrangement (20) of a fuel cell vehicle (10), comprising the steps of a method (100) according to any of the claims 10-17, the method (100) configured to be performed by a processing circuitry of a control system (50) of the fuel cell arrangement (20) of the fuel cell vehicle (10).

19. A computer program product comprising program code for performing, when executed by the processing circuitry, the method of any of claims 10-17.

20. A non-transitory computer-readable storage medium comprising instructions, which when executed by the processing circuitry, cause the processing circuitry to perform the method of any of claims 10-17.
